# EUROPÄISCHE PATENTSCHRIFT

(11) **EP 2 675 959 B1**
(45) Veröffentlichungstag und Bekanntmachung des Hinweises auf die Patenterteilung: **04.03.2015**
(21) Anmeldenummer: 12700785.4
(22) Anmeldetag: 19.01.2012
(51) Int. Cl.: E04B 1/04, E04H 7/18, E04H 7/28, E04H 12/12

(54) **BETONKONSTRUKTION**
CONCRETE STRUCTURE
CONSTRUCTION EN BÉTON

(30) Priorität: 16.02.2011 DE 102011011414
(43) Veröffentlichungstag der Anmeldung: 25.12.2013
(73) Patentinhaber: Drössler GmbH Umwelttechnik, 57080 Siegen (DE)
(72) Erfinder: STAHL, Michael, 51580 Reichshof (DE)
(74) Vertreter: Grosse, Wolf-Dietrich Rüdiger
(86) Internationale Anmeldenummer: PCT/EP2012/000229
(87) Internationale Veröffentlichungsnummer: WO 2012/110189

(56) Entgegenhaltungen:
- DE-U1- 20 319 471
- GB-A- 560 861
- US-A- 2 290 369

## Beschreibung

Die Erfindung betrifft eine Betonkonstruktion bestehend aus mindestens zwei aufstehenden Fertigbeton-Elementen.

Derartige Fertigbeton-Elemente weisen in der Regel eine plattenförmige Gestalt auf und werden z. B. im Großbehälterbau oder beim Bau von Türmen für Windkraftanlagen eingesetzt. Um Kräfte zwischen den einzelnen Fertigbeton-Elementen übertragen zu können, werden diese über Frischbeton miteinander verbunden. Im Wesentlichen werden jedoch die Kräfte von den, die Fertigbeton-Elemente verbindenden Spannseilen aufgenommen.

Bei größeren Betonkonstruktionen bilden die Stoßstellen in der Regel bezüglich der Übertragung von Kräften Schwachstellen. Von daher wird schon in der DE 93 18 930 U1 vorgeschlagen, im Bereich der Stoßstellen längsgerichtete Feder-Nut-Verbindungen vorzusehen. Damit lassen sich jedoch nur Kräfte in einer Richtung aufnehmen. Durch den Einsatz von Ringösenschrauben und in diese einfädelbare Armierungsstäbe können Kräfte in einer zweiten Richtung aufgenommen werden. Das Einfädeln der Armierungsstäbe ist jedoch wegen der notwendigen Justierung der Ringösenschrauben schwierig und Zeitaufwändig.

Die DE 203 19 471 U1 offenbart eine Verbindungsfuge zwischen zwei Betonfertigteilen, die beidseitig je mindestens zwei nebeneinander angeordnete vertiefte Nuten aufweist, in die Vergussmaterial eingebracht werden kann. Damit könnten erst nach Abbinden des Vergussmaterials Kräfte in einer Richtung aufgenommen werden. Die DE 203 19 471 U1 offenbart jedoch weiterhin Verzahnungselemente, die auch schon beim Zusammenfügen der Betonfertigteile Halt in einer zweiten Richtung gewährleisten. Der DE 203 19 471 U1 sind weiterhin in den Nuten angeordnete Schlaufen entnehmbar, die zur Aufnahme von Armierungsstäben dienen. Damit können grundsätzlich Kräfte in der dritten Richtung aufgenommen werden. Aber auch hier ist wegen der Flexibilität der Schlaufen eine sichere Kraftaufnahme erst nach Abbinden des Vergussmaterials möglich. Während des Zusammenbaus der Betonfertigteile müssen diese so lange aufwändig gestützt werden, bis das die Betonfertigteile verbindende Vergussmaterial abgebunden ist..

US 2 290 369 A offenbart eine Betonkonstruktion gemäß dem Oberbegriff des Anspruchs 1.

Der Erfindung liegt die Aufgabe zugrunde, Stoßstellen zwischen Fertigbeton-Elementen so weiterzubilden, dass Kräfte auch schon beim Zusammenbau der Fertigbeton-Elemente in mindestens zwei Richtungen besser aufgenommen werden können.

Zur Lösung der Aufgabe wird vorgeschlagen, dass im Bereich mindestens einer Stoßstelle zwischen den Fertigbeton-Elementen mindestens zwei Feder-Nut-Verbindungen vorgesehen sind, wobei eine der Feder-Nut-Verbindung gegenüber der zweiten Feder-Nut-Verbindung im Bereich zwischen ca. 1° und ca. 179° zueinander verdreht angeordnet ist und dass die Stoßstelle gekröpft ausgebildet ist, und die Feder-Nut-Verbindung in den, im Wesentlichen parallel zur Oberfläche der Fertigbeton-Elemente verlaufenden Bereichen der Kröpfung vorgesehen sind.

Dadurch das z. B. eine Feder-Nut-Verbindung in senkrechter Richtung ausgerichtet ist und die zweite Feder-Nut-Verbindung an der gleichen Stoßstelle um einen bestimmten Betrag gegen die Ausrichtung der ersten Feder-Nut-Verbindung verdreht angeordnet ist, lassen sich optimal Kräfte in zwei Richtungen aufnehmen. Durch die Ausbildung der Stoßstelle in gekröpfter Form können zusätzlich auch Kräfte in der dritten Richtung aufgenommen werden. Dadurch können Druck- bzw. Zugkräfte zwischen den Fertigbeton-Elementen ebenso wie vertikale und horizontale, quer zu den Zugkräften gerichtete Kräfte aufgenommen werden.

Von Vorteil ist, dass die Feder-Nut-Verbindungen um ca. 45° und / oder ca. 90° verdreht angeordnet sind. Bei einer 90°-Verdrehung lassen sich z. B. optimal vertikale und horizontale Kräfte aufnehmen.

Zweckmäßig ist, dass die Fertigbeton-Elemente an mindestens zwei ihrer gegenüberliegenden Seite mit Federn und / oder Nute ausgestattet sind und dass die Federn und Nute der einen Seite des Fertigbeton-Elementes sich durch Nute und Feder auf der gegenüberliegenden Seite des Fertigbeton-Elementes korrespondierend ergänzen.

Durch diese Anordnung der Federn und Nute können immer gleiche Fertigbeton-Elemente ohne Probleme miteinander verbunden werden und dennoch optimal Kräfte in mehreren Richtungen an ihren Stoßstellen aufnehmen.

Nachahmenswert ist, dass jedes Fertigbeton-Element an einer seiner Seiten mit Federn und an der gegenüberliegenden Seite mit Nute ausgestattet ist.

Die Fertigbeton-Elemente lassen sich leichter zusammenbauen, wenn in dem, im Wesentlichen parallel zur Oberfläche der Fertigbeton-Elemente verlaufenden Bereich der Kröpfung mechanische Verbindungen, vorzugsweise Schraubverbindungen vorgesehen sind.

Diese Schraubverbindungen in Verbindung mit den Feder-Nut-Verbindungen können bei kleinen Betonkonstruktionen ausreichen, um die auftretenden Kräfte zu übernehmen. Regelmäßig dienen die Feder-Nut-Verbindungen sowie die Verschraubungen jedoch zur Entlastung der Zugseile und gleichmäßigeren Verteilung der Kräfte innerhalb der Betonkonstruktion.

Zweckmäßig ist, dass die Feder-Nut-Verbindungen geklebt sind. Als eine Version der Verklebung wird vorgeschlagen, dass die Feder-Nut-Verbindung mittels Injektionsmörtel verbunden sind.

Es besteht jedoch auch die Möglichkeit, die Feder-Nut-Verbindung stumpf zu fügen.

Die Erfindung wird anhand einer Zeichnung näher erläutert. Dabei zeigt
- Figur 1a: ein abschnittweise dargestelltes Fertigbeton-Element mit im Stoßbereich angeordneten Nute;
- Figur 1b: ein entsprechend komplementäres abschnittsweise dargestelltes Fertigbeton-Element mit im Stoßbereich dargestellten Federn;
- Figur 2: die zusammengefügten Fertigbeton-Elemente gemäß Figur 1 a und b;
- Figur 3: einen Ausschnitt aus einer gekröpft ausgebildeten Stoßstelle; und
- Figur 4: einen Ausschnitt einer Stoßstelle mit Verbindungselementen.

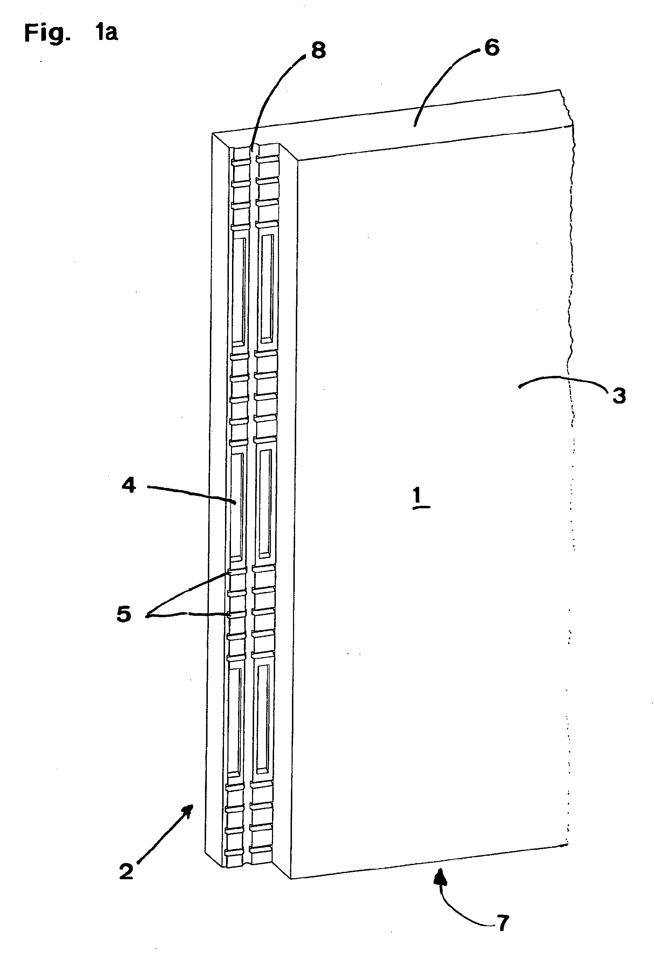

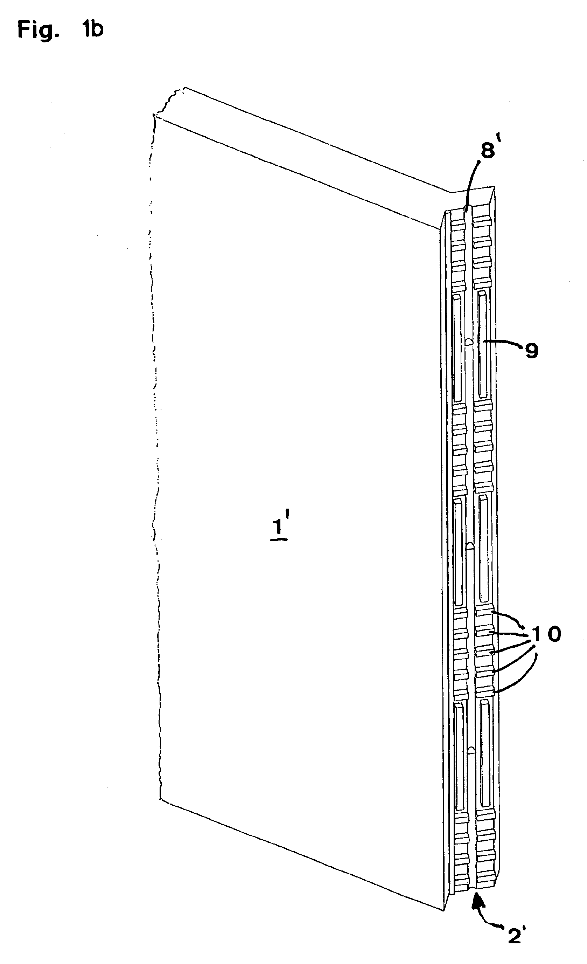

Die Figur 1 a zeigt abgeschnitten dargestellt ein Fertigbeton-Element 1 mit einer in Draufsicht gekröpft dargestellten Stoßstelle 2. Der im Wesentlichen parallel zur Oberfläche 3 des Fertigbeton-Elements 1 dargestellte Bereich weist senkrechte Nute 4 sowie waagerechte Nute 5 auf. Die Nute sind im Wesentlichen um 90° zueinander verdreht. Die Nute sind symmetrisch zur Oberseite 6 und Unterseite 7 hier in zwei Reihen angeordnet, wobei zwischen den beiden Reihen eine halbkreisförmige Nut 8 ausgebildet ist, die später einen Teil eines Injektionskanals für den Injektionsmörtel bildet.

Figur 1b zeigt eine entsprechend komplementäre Seite eines Fertigbeton-Elements 1', wobei im Bereich der Kröpfung hier senkrechte Federn 9 und waagerechte Federn 10 dargestellt sind. Das Fertigbeton-Element 1' selbst ist im Bereich der Kröpfung winklig dargestellt, so dass z. B. eine mehreckige Betonkonstruktion, beispielsweise eine mehreckiger Windkraftturm gebildet werden kann.

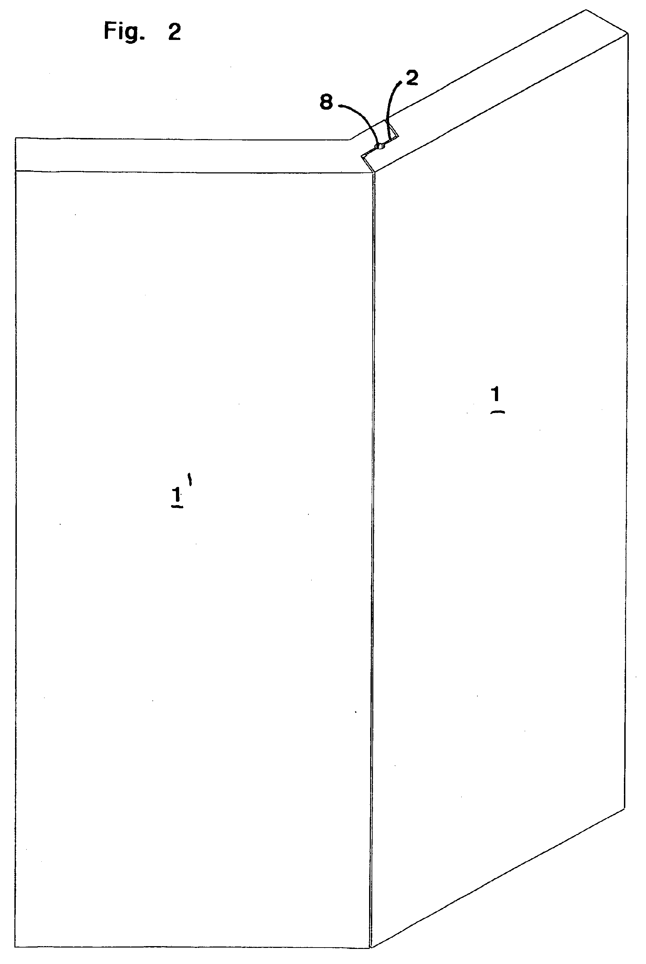

Figur 2 zeigt die zusammengefügten Fertigbeton-Elemente 1 und 1'. Durch die zusammengefügten Nute 4, 5 und Federn 9, 10 kann die Stoßstelle Zug- und Druckkräfte sowohl in X- als auch in Y-Richtung aufnehmen. In Z-Richtung dient die Kröpfung dazu, entsprechende Kräfte aufzunehmen.

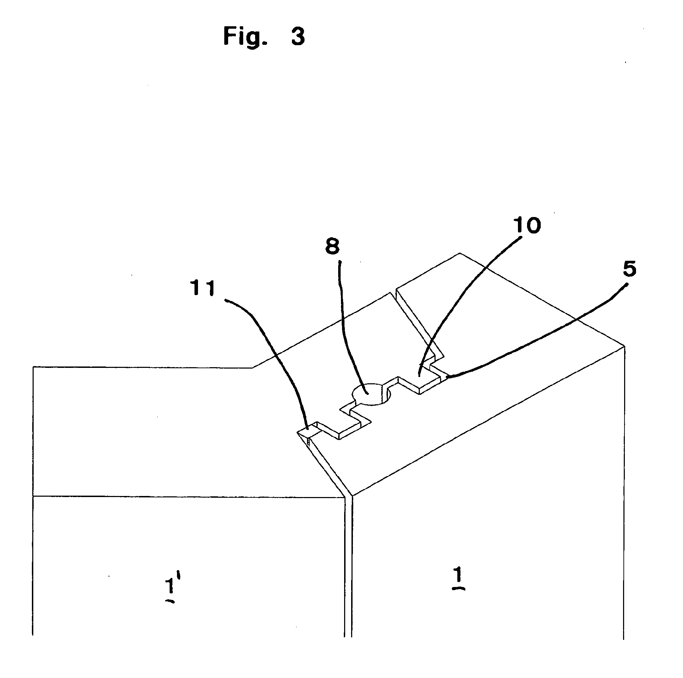

Figur 3 zeigt vergrößert dargestellt den Ausschnitt der Verbindung der Fertigbeton-Elemente 1 und 1'. Hier sind die waagerechten Federn 10 sowie die waagerechten Nute 5 zu erkennen. Die beiden halbkreisförmigen Nute 8, 8' der Fertigbeton-Elemente bilden einen Injektionskanal, über den Frischbeton bzw. Injektionsmörtel in die Fuge zwischen den Fertigbeton-Elementen eingebracht werden kann. Damit der Frischbeton nicht aus den Fugen seitlich auslaufen kann, zeigt Figur 3 eine Dichtungslippe 11. Im Bereich der Innenwand der Fertigbeton-Elemente ist z. B. eine Abdichtung durch einen vor Einbringen des Injektionsmörtels angebrachten Klebestreifen möglich.

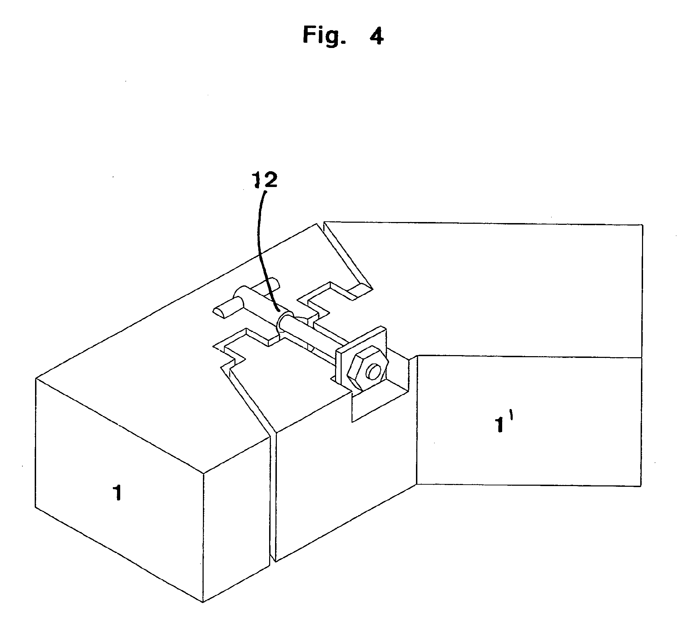

Figur 4 zeigt, dass im Bereich der gekröpft dargestellten Stoßstelle eine Schraubverbindung 12 vorgesehen ist, welche einerseits bei der Montage der Fertigbeton-Elemente 1,1' deren Zusammenhalt gewährleistet und die auch, nachdem die Fugen mit einem Injektionsmörtel ausgefüllt sind, der Verbindung weiterhin Stabilität verleiht.

### Bezugszeichenübersicht

- 1: Fertigbeton-Element
- 2: Stoßstelle
- 3: Oberfläche
- 4: senkrechte Nut
- 5: waagerechte Nut
- 6: Oberseite
- 7: Unterseite
- 8: halbkreisförmige Nut
- 9: senkrechte Feder
- 10: waagerechte Feder
- 11: Dichtungslippe
- 12: Schraubverbindung

## Patentansprüche

1. Betonkonstruktion, bestehend aus mindestens zwei aufstehenden Fertigbeton-Elementen (1, 1'), wobei
im Bereich mindestens einer Stoßstelle (2, 2') zwischen den Fertigbeton-Elementen (1, 1') mindestens zwei Feder-Nut-Verbindungen (4,9; 5,10) vorgesehen sind, wobei die Stoßstelle (2, 2') gekröpft ausgebildet ist, und die Feder-Nut-Verbindungen (4,9; 5,10) in den, im Wesentlichen parallel zur Oberfläche (3) der Fertigbeton-Elemente (1) verlaufenden Bereichen der Kröpfung vorgesehen sind, **dadurch gekennzeichnet, dass** eine der Feder-Nut-Verbindungen (4,9) gegenüber der zweiten Feder-Nut-Verbindung (5,10) in einem Bereich zwischen ca. 1° und ca. 179° gegeneinander verdreht angeordnet ist.

2. Betonkonstruktion nach Anspruch 1,
**dadurch gekennzeichnet,**
**dass** die Feder-Nut-Verbindungen (4,9; 5,10) um ca. 45° und / oder ca. 90° verdreht angeordnet sind.

3. Betonkonstruktion nach Anspruch 1 oder 2,
**dadurch gekennzeichnet,**
**dass** die Fertigbeton-Elemente (1, 1') an mindestens zwei ihrer gegenüberliegenden Seiten mit Federn (9,10) und / oder Nute (4,5) ausgestattet sind und dass die Federn und Nute der einen Seite des Fertigbeton-Elementes sich durch Nute und Federn auf der gegenüberliegenden Seite des Fertigbeton-Elementes korrespondierend ergänzen.

4. Fertigbetonkonstruktion nach mindestens einem der Ansprüche 1 bis 3,
**dadurch gekennzeichnet,**
**dass** jedes Fertigbeton-Element an einer seiner Stoßstellen (2, 2') mit Federn (9, 10) und an der gegenüberliegenden Seite mit Nute (4, 5) ausgestattet ist.

5. Betonkonstruktionen nach mindestens einem der Ansprüche 1 bis 4,
**dadurch gekennzeichnet,**
**dass** im, im Wesentlichen parallel zur Oberfläche (3) der Fertigbeton-Elemente (1, 1') verlaufenden Bereich der Kröpfung mechanische Verbindungen, vorzugsweise Schraubverbindungen (12) vorgesehen sind.

6. Betonkonstruktion nach mindestens einem der Ansprüche 1 bis 5,
**dadurch gekennzeichnet,**
**dass** die Feder-Nut-Verbindungen (4,9; 5,10) geklebt sind.

7. Betonkonstruktion nach mindestens einem der Ansprüche 1 bis 6,
**dadurch gekennzeichnet,**
**dass** die Feder-Nut-Verbindung (4,9; 5,10) mittels Injektionsmörtel verbunden sind.

8. Betonkonstruktion nach mindestens einem der Ansprüche 1 bis 6,
**dadurch gekennzeichnet,**
**dass** die Feder-Nut-Verbindungen (4,9; 5,10) stumpf gefügt sind.

## Claims

1. A concrete structure consisting of at least two upright ready-mixed concrete elements (1, 1'), wherein at least two tongue-and-groove connections (4, 9; 5, 10) are provided in the area of at least one joint (2, 2') between the ready-mixed concrete elements (1, 1'), **characterized in that** one of the tongue-and-groove connections (4, 9) is twisted relative to the second tongue-and-groove connection (5, 10) within a range of between approx. 1° and approx. 179°, the joint (2, 2') is offset in design, and the tongue-and-groove connections (4, 9; 5, 10) are provided in the areas of the offset running essentially parallel to the surface (3) of the ready-mixed concrete elements (1).

2. The concrete structure according to claim 1,
**characterized in that**
the tongue-and-groove connections (4, 9; 5, 10) are twisted by approx. 45° and/or approx. 90°.

3. The concrete structure according to claim 1 or 2,
**characterized in that**
at least two opposing sides of the ready-mixed concrete elements (1, 1') are equipped with tongues (9, 10) and/or grooves (4, 5), and that the tongues and grooves on the one side of the ready-mixed concrete element are correspondingly enhanced by grooves and tongues on the opposing side of the ready-mixed concrete element.

4. The concrete structure according to at least one of claims 1 to 3,
**characterized in that**
one of the joints (2, 2') of each ready-mixed concrete elements is equipped with tongues (9, 10), while the opposing side is equipped with grooves (4, 5).

5. The concrete structure according to at least one of claims 1 to 4,
**characterized in that**
mechanical linkages, preferably screw joints (12), are provided in the area of the offset running essentially parallel to the surface (3) of the ready-mixed concrete elements (1, 1').

6. The concrete structure according to at least one of claims 1 to 5,
**characterized in that**
the tongue-and-groove connections (4, 9; 5, 10) are adhesively bonded.

7. The concrete structure according to at least one of claims 1 to 6,
**characterized in that**
the tongue-and-groove connections (4, 9; 5, 10) are joined together with grout.

8. The concrete structure according to at least one of claims 1 to 6,
**characterized in that**
the tongue-and-groove connections (4, 9; 5, 10) are butt jointed.

## Revendications

1. Construction en béton, constituée d'au moins deux éléments en béton prêt à l'emploi (1, 1'), dans laquelle
au moins deux assemblages à rainure et languette (4, 9 ; 5, 10) sont prévus dans la région d'au moins un point de jonction (2, 2') entre les éléments en béton prêt à l'emploi (1, 1'), dans laquelle le point de jonction (2, 2') est conçu coudé et les assemblages à rainure et languette (4, 9 ; 5, 10) sont prévus dans les régions du coude essentiellement parallèles à la surface (3) des éléments en béton prêt à l'emploi (1), **caractérisée en ce que** l'un des assemblages à rainure et languette (4, 9) est disposé de façon décalée d'environ 1° à environ 179° par rapport au deuxième assemblage à rainure et languette (5, 10).

2. Construction en béton selon la revendication 1,
**caractérisée en ce que**
les assemblages à rainure et languette (4, 9 ; 5, 10) sont disposés de façon décalée d'environ 45° et/ou d'environ 90°.

3. Construction en béton selon la revendication 1 ou 2,
**caractérisée en ce que**
les éléments en béton prêt à l'emploi (1, 1') sont pourvus de languettes (9, 10) et/ou de rainures (4, 5) sur au moins deux de leurs côtés opposés, et **en ce que** les rainures et languettes d'un côté de l'élément en béton prêt à l'emploi sont complémentaires avec des rainures et languettes sur le côté opposé de l'élément en béton prêt à l'emploi.

4. Construction en béton prêt à l'emploi selon au moins l'une des revendications 1 à 3,
**caractérisée en ce que**
chaque élément en béton prêt à l'emploi est pourvu de languettes (9, 10) sur l'un de ses points de jonction (2, 2') et de rainures (4, 5) sur le côté opposé.

5. Construction en béton selon au moins l'une des revendications 1 à 4,
**caractérisée en ce que**
il est prévu des assemblages mécaniques, de préférence des assemblages à vis (12), dans la région du coude essentiellement parallèle à la surface (3) des éléments en béton prêt à l'emploi (1, 1').

6. Construction en béton selon au moins l'une des revendications 1 à 5,
**caractérisée en ce que**
les assemblages à rainure et languette (4, 9 ; 5, 10) sont collés.

7. Construction en béton selon au moins l'une des revendications 1 à 6,
**caractérisée en ce que**
les assemblages à rainure et languette (4, 9 ; 5, 10) sont reliés à l'aide d'un mortier d'injection.

8. Construction en béton selon au moins l'une des revendications 1 à 6,
**caractérisée en ce que**
les assemblages à rainure et languette (4, 9 ; 5, 10) sont reliés bout à bout.
